# FASCICULE DE BREVET EUROPEEN

(11) **EP 1 220 730 B1**
(45) Date de publication et mention de la délivrance du brevet: **22.11.2006**
(21) Numéro de dépôt: 00949672.0
(22) Date de dépôt: 07.07.2000
(51) Int. Cl.: B23K 7/06, G01N 25/72

(54) **INSTALLATION DE SONDAGE EN CONTINU DE PRODUITS SIDERURGIQUES VENANT DE COULEE**
VORRICHTUNG ZUM KONTINUIERLICHEN ÜBERWACHEN VON STRANGGEGOSSENEN EISENHÜTTENPRODUKTEN
INSTALLATION FOR CONTINUOUSLY MONITORING FERROUS PRODUCTS DERIVED FROM CASTING

(30) Priorité: 30.07.1999 FR 9909949
(43) Date de publication de la demande: 10.07.2002
(73) Titulaire: Donze, Michel, F-54460 Liverdun (FR); Rozot, Thierry, 54115 Thorey Lyautey (FR)
(72) Inventeur: Donze, Michel, F-54460 Liverdun (FR); Rozot, Thierry, 54115 Thorey Lyautey (FR)
(74) Mandataire: Jaunez, Xavier
(86) Numéro de dépôt international: PCT/FR2000/001965
(87) Numéro de publication internationale: WO 2001/008842

(56) Documents cités:
- EP-A- 0 512 972
- US-A- 1 728 972
- "Enhancement of penetrant-inspection images" NTIS TECH NOTES, février 1991 (1991-02), pages 189-189, XP000224784 springfield, VA, US

## Description

La présente invention concerne un procédé et une installation de sondage en continu de produits sidérurgiques venant de coulée, du type décrit dans le document JP-A-59174275.

Les produits sidérurgiques tels que brames, blooms, billettes en acier, par exemple, qu'ils soient obtenus à partir d'une coulée en lingot ou d'une coulée continue, sont généralement transformés en produits plats ou longs par laminage à chaud. Le sidérurgiste cherche en général à bénéficier au maximum de la chaleur du produit sortant de la coulée, pour effectuer cette opération de laminage.

Toutefois, ces produits peuvent présenter au voisinage de leur surface des défauts, visibles ou non, tels que fissures, criques, soufflures, inclusions de gaz, qui risquent de subsister sur les produits laminés ou même de s'amplifier et d'entraîner ainsi leur rebut, sans parler d'un éventuel endommagement de la surface des cylindres du laminoir.

C'est pourquoi il s'avère en général nécessaire, avant de procéder au laminage, d'examiner les produits pour savoir s'ils peuvent être laminés directement ou s'ils doivent être préalablement traités pour supprimer ou réparer les défauts qu'ils présentent.

Dans les techniques traditionnelles, l'examen pour la détection des défauts nécessite un refroidissement préalable du produit sidérurgique.

Pour illustrer l'état de la technique, on peut toutefois citer le document EP-A-0512972 qui décrit un procédé de contrôle d'une soudure bout à bout de bandes métalliques, selon lequel on établit une carte thermique de la soudure et de la zone avoisinante, et on compare les profils de température mesurée à au moins un profil de température de référence. L'approche pour ce contrôle de soudure est donc fondée sur une technique de thermographie.

On a ensuite développé il y a une dizaine d'années une technique d'observation d'un bain en fusion produit par un chalumeau évitant d'exposer le matériel d'observation visuelle aux projections et fumées environnantes. C'est ainsi que, dans le document EP-A-0336807, la demanderesse décrit un chalumeau à dispositif d'observation visuelle intégré. Un tel chalumeau comporte un corps renfermant un dispositif optique d'observation visuelle disposé à l'intérieur du conduit central d'arrivée d'oxygène, la surface de l'orifice principal correspondant sensiblement à celle embrassée par l'angle de vue de l'objectif du dispositif d'observation.

Bien que cette technique ait procuré des avantages considérables par rapport aux dispositifs antérieurs, l'oeil humain reste nécessaire pour l'observation visuelle de la zone du bain de décriquage, et l'utilisation de cassettes d'enregistrement implique en outre une gestion lourde pour l'utilisateur.

D'une façon générale, l'analyse de défauts est presque toujours effectuée a posteriori, sur des produits sidérurgiques tels que des brames, déjà coupés et refroidis. Par suite, on parvient certes à détecter la présence de défauts, mais il est alors trop tard pour intervenir sur la ligne de coulée pour en effectuer un réglage ad hoc.

Pour illustrer l'état de la technique, on peut citer l'article intitulé « Enhancement of penetrant-inspection images » extrait de NASA Tech Brief, février 1991, page 189, Springfield, VA (USA). Cet article décrit une méthode de reconnaissance des défauts d'un cordon de soudure par analyse d'images de ces défauts éclairés par une source de lumière UV destinée à faire ressortir des particules fluorescentes déposées sur ces défauts. Il s'agit d'une technique de contrôle non destructrif seulement en usage dans un laboratoire d'analyse métallurgique, cette technique étant intransposable pour un sondage en coulée continue du fait de la nécessité d'éclairer les défauts avec une source UV et d'utiliser une camera qui serait à tout le moins gênée par les fumées dégagées par le chalumeau, voire inutilisable au voisinage de pièces de coulée continue.

L'arrière-plan technologique est enfin illustré par le document US-A-1728972 qui décrit un chalumeau traditionnel, sans dispositif d'observation visuelle, monté sur un équipage mobile.

Il apparaît ainsi un besoin important d'une installation capable d'effectuer un sondage en continu de produits sidérurgiques venant directement de coulée.

L'invention a précisément pour but de résoudre ce problème, en concevant une telle installation de sondage en continu qui permette un traitement automatique, avec une possibilité d'intervenir sur la ligne de coulée en évitant ainsi le déroutement du flot métal, le stockage intermédiaire avec ses manutentions, et la production de produits défectueux.

L'installation a également pour but de concevoir un procédé et une installation de sondage en continu qui soit en outre compatible avec des techniques d'automatisation de décriquage ou d'oxycoupage.

Ce problème est résolu conformément à l'invention grâce à un procédé de sondage en continu selon la revendication 1 et à une installation de sondage en continu selon la revendication 10.

Le reconnaissance automatique des défauts permet ainsi d'établir une cartographie automatique et complète du produit sidérurgique, et ce dans le cadre d'une utilisation directement en sortie de la ligne de coulée. On parvient alors à automatiser en totalité l'installation de sondage, avec un pilotage complet du sondage effectué en continu sur un produit chaud.

On pourra prévoir une pluralité de chalumeaux à gaz disposés chacun devant une face du produit sidérurgique, de façon à permettre l'inspection simultanée, en plusieurs endroits si nécessaire, de plusieurs faces et rives dudit produit sidérurgique. Ceci permet en particulier d'inspecter simultanément les faces supérieure et inférieure ainsi que les faces latérales d'une brame ou billette de coulée.

Dans l'installation selon l'invention, le dispositif d'analyse d'images et de reconnaissance des défauts comporte un moyen pour analyser des différences de nuances sur la surface inspectée afin de détecter la présence d'un défaut, un moyen pour analyser des paramètres dimensionnels du défaut localisé, et un moyen pour comparer ces paramètres à des paramètres préétablis afin d'identifier le type de défaut dont il s'agit. En particulier les paramètres dimensionnels analysés seront choisis dans le groupe comportant lé profil périmétrique, la surface, la position du barycentre et la profondeur du défaut, ainsi que toute mesure nécessaire à une meilleure définition.

On parvient ainsi à une analyse fine et précise des caractéristiques du défaut détecté, ce qui permet d'aider à comprendre les causes qui ont amené à la création de tel défauts, et par suite d'intervenir au niveau de la ligne de coulée.

Conformément à un mode de réalisation avantageux, le procédé comporte le décriquage des défauts détectés au moyen d'une installation de décriquage placée en aval des moyens de détection de défauts, cette installation de décriquage étant pilotée, en fonction du défaut précédemment détecté et reconnu par l'installation de sondage, en vue d'un décriquage automatique de la zone dudit défaut.

Selon un autre mode de réalisation, ledit au moins un chalumeau à gaz équipé du dispositif d'observation visuelle est un chalumeau d'oxycoupage. Ceci permet une visualisation de la saignée de coupe et de ses éventuels défauts afin de réaliser la régulation automatique des paramètres de coupe.

En variante, le chalumeau à gaz équipé du dispositif d'observation visuelle est un chalumeau de décriquage. Ceci permet de réaliser une régulation automatique dudit chalumeau en fonction de la disparition des défauts. On parvient ainsi à réaliser une unité de travail extrêmement souple permettant une opération de décriquage et/ou de sondage réalisée de façon totalement automatique.

Conformément à une autre caractéristique avantageuse, le dispositif d'observation visuelle comporte une caméra reliée à au moins une fibre optique passant dans le corps du chalumeau. Il va de soi que dans certaines situations, notamment celle d'un oxycoupage de plaques très épaisses, on pourra se passer d'une telle caméra dans la mesure où une fibre optique unique suffit pour surveiller le champ étroit à inspecter qui est limité à la largeur de la ligne de coupe.

De préférence encore, le dispositif d'analyse d'images et de reconnaissance des défauts est relié à une unité de traitement comportant un ordinateur et une imprimante.

Avantageusement enfin, le dispositif d'analyse d'images et de reconnaissance des défauts est relié à l'automate de coulée pour permettre une intervention sur les paramètres de coulée en fonction des défauts détectés et reconnus. Une telle intervention effectuée directement sur la ligne de coulée permet de contrer, dans un délai extrêmement bref, les phénomènes qui ont induit la création des défauts détectés. Une telle possibilité d'intervention représente un avantage considérable dans la pratique, par rapport aux techniques classiques d'observation sur produit froid qui ne permettaient d'agir que très tardivement sur la ligne de coulée.

D'autres caractéristiques et avantages de l'invention apparaîtront plus clairement à la lecture de la description qui va suivre et des dessins annexés, concernant un mode de réalisation particulier, en référence aux figures où:
- la figure 1 est une vue en perspective illustrant une installation de sondage en continu sur une seule face conforme à l'invention, en cours d'intervention sur une brame ici en défilement ;
- la figure 2 est une vue de dessus schématique de l'installation précédente ;
- la figure 3 est une vue partielle permettant de mieux distinguer la structure du chalumeau avec son dispositif d'observation visuelle ;
- la figure 4 est une vue en bout de la zone de sortie du corps de chalumeau ;
- la figure 5 illustre schématiquement une variante de l'installation de sondage précédente, dans laquelle on utilise deux chalumeaux de sondage pour inspecter deux faces opposées d'un produit sidérurgique ;
- la figure 6 est une vue de dessus à échelle agrandie représentant le bain de sondage et la zone du champ de visualisation observé par le dispositif équipant le chalumeau de l'installation de sondage ;
- la figure 7 est une vue schématique de la zone du champ de visualisation, montrant trois défauts typiques qui sont localisés et reconnus, la figure 8 illustrant l'organisation de différentes lignes de jauge visant à déterminer certains paramètres dimensionnels des défauts localisés ;
- la figure 9 est une vue schématique de l'installation de sondage en continu selon l'invention associée à une unité de traitement.

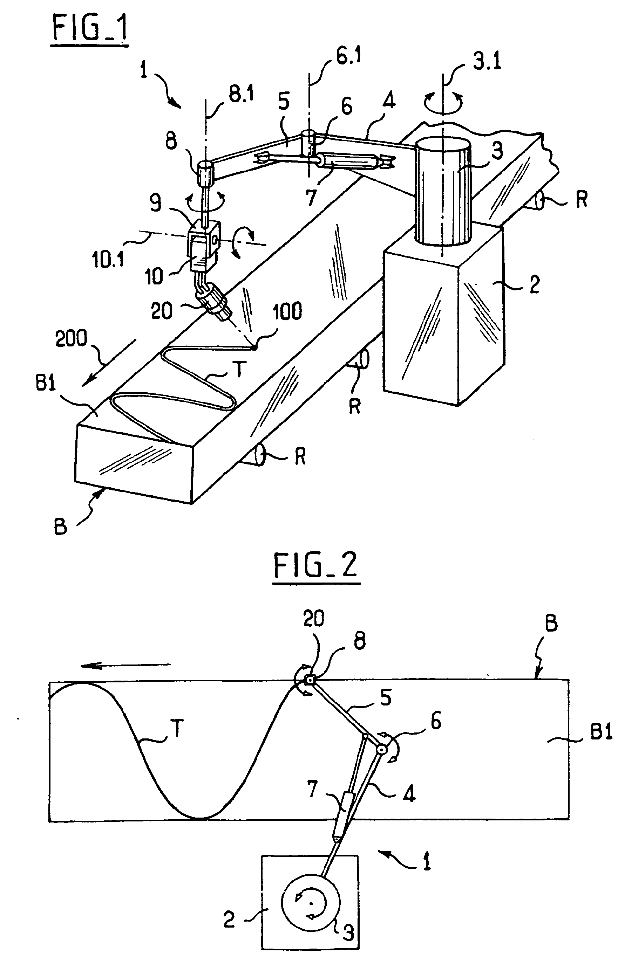

Les figures 1 et 2 illustrent une installation de sondage en continu 1 selon l'invention qui permet d'inspecter une face d'un produit sidérurgique venant directement de coulée, tels que brames ou billettes. On a représenté ici une brame B se déplaçant sur des rouleaux R, mais il va de soi que l'invention n'est pas limitée au sondage d'un produit en défilement, mais s'applique aussi au sondage d'un produit fixe. L'installation de sondage 1 comporte une potence 2 surmontée d'une tourelle 3 mobile autour d'un axe vertical 3.1 en pouvant tourner de 360° autour de cet axe. La tourelle 3 porte un premier bras 4 en porte-à-faux, qui est relié à un second bras 5 par une articulation 6 au niveau d'un axe vertical 6.1. L'angle formé par les bras 4 et 5 est déterminé par un actionneur commandé qui est ici un vérin 7 (en variante, on pourra remplacer le vérin par un moteur hydraulique coaxial à l'articulation). Le bras 5 se termine par une articulation 8 au niveau d'un axe vertical 8.1, en supportant une fourche 9 sur laquelle est articulé un support de chalumeau 10. L'articulation se fait autour d'un axe 10.1 horizontal, et la fourche 9 peut tourner sur une plage d'au moins 180° autour de l'axe vertical 8.1.

Un chalumeau à gaz 20 est accroché au support 10, l'axe dudit chalumeau étant ici incliné par rapport à la verticale, par exemple selon un angle de 30°. Le chalumeau à gaz 20 sert à réaliser sur la face B1 de la brame B un bain dit "bain de sondage" noté 100. Le dispositif d'observation visuelle qui est intégré à ce chalumeau à gaz 20 va permettre justement d'inspecter une zone de ce bain de sondage 100, afin de détecter et de reconnaître les défauts qui peuvent s'y trouver.

On a illustré la trajectoire sinusoïdale T de l'impact de flamme du chalumeau à gaz 20 sur la face B1 de la brame B. Il va de soi que ce tracé est totalement configurable en fonction des impératifs concernés. Le chalumeau à gaz 20, qui est disposé devant la face B1 du produit sidérurgique B en défilement pour y générer le bain de sondage 100, est déplaçable de façon commandé transversalement à la direction de défilement (notée 200), Le déplacement du chalumeau 20 est obtenu par une commande de la motorisation de la tourelle 3 autour de son axe 3.1, de l'actionneur 7, et du mécanisme de rotation intégré à l'articulation 8 pour l'axe vertical 8.1. Les différents paramètres angulaires sont variables selon une loi prédéterminée qui permet ainsi de fixer la trajectoire désirée du point d'impact sur la face du produit sidérurgique inspecté. Comme on connaît la vitesse de défilement du produit sidérurgique, et que l'on connaît à tout moment la position exacte dans l'espace du chalumeau à gaz 20, il est possible de déterminer l'emplacement exact du bain de sondage 100 sur la face inspectée. Ainsi, lorsque l'on détecte un défaut sur cette face grâce au dispositif d'observation visuelle et à un dispositif associé d'analyse d'images et de reconnaissance automatique de défauts, on peut déterminer parfaitement l'emplacement du défaut, et par suite de commander automatiquement l'élimination du défaut par décriquage et donner à temps et au bon moment des informations précises. Ceci permet en outre d'aider à la compréhension de la création du défaut, et aussi d'établir une classification des produits fabriqués.

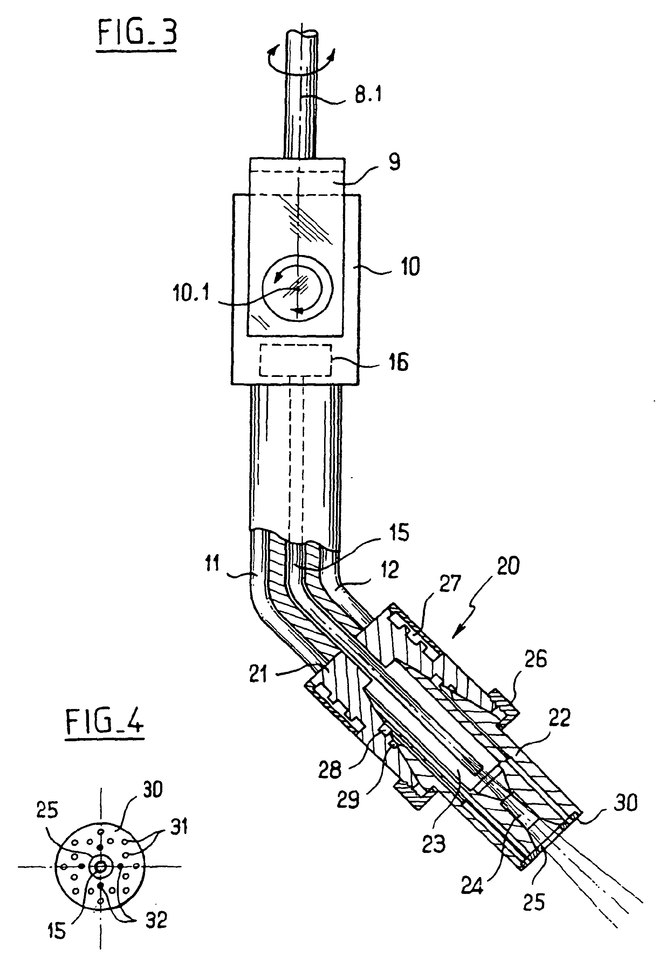

Les figures 3 et 4 permettent de mieux distinguer la structure du chalumeau à gaz 20. On reconnait la fourche 9 servant à supporter le support de chalumeau 10 et le chalumeau à gaz 20. Le bloc de support 10, articulé autour de l'axe 10.1, se prolonge par des canalisations d'alimentation et de refroidissement 11,12 menant à un corps de chalumeau ici constitué de deux blocs complémentaires 21,22 assemblés par une bague 26. Le corps de chalumeau 21,22 présente un conduit central d'arrivée d'oxygène 23 dans lequel est agencé un dispositif d'observation visuelle 15, ici schématisé par un ensemble de fibre optique. Le conduit central d'arrivée d'oxygène 23 se prolonge vers l'aval par une tuyère 24, qui débouche au niveau d'un orifice de sortie 25. La partie amont 21 du corps de chalumeau est équipé de moyens 27 assurant le refroidissement du corps de chalumeau. Elle présente également des gorges 28,29 servant à l'alimentation, par des canaux axiaux associés traversant la partie aval 22 du chalumeau, respectivement en oxygène et en gaz, par exemple en gaz naturel. Un disque 30 est prévu au niveau de la sortie du corps de chalumeau, et la figure 4 permet de distinguer la pluralité d'orifices de sortie : on distingue ainsi autour de l'orifice central 25 (avec en arrière le bout de la fibre optique 15), des orifices 31 qui correspondent aux dards de chauffe, ainsi que quelques orifices 32 qui illustrent la possibilité d'insuffler de la poudre d'amorçage, par exemple de fer, ce qui permet notamment de sonder des brames en acier inoxydable. On notera également sur la figure 3, la présence d'une caméra 16 associée aux fibres optiques 15, qui est intégrée au support 10 du corps du chalumeau.

Pour une compréhension complète d'une telle structure de chalumeau à gaz à dispositif d'observation visuelle intégré, on se référera utilement au document EP-A-0336 807 précité.

Le dispositif d'observation visuelle 15,16 permet ainsi l'observation directe d'une zone de la face concernée du produit sidérurgique où est créé le bain de sondage 100. Ainsi que cela sera décrit en détail.plus loin, l'installation de sondage comporte également un dispositif d'analyse d'images et de reconnaissance automatique des défauts apparaissant dans le champ de vision du dispositif d'observation visuelle 15,16.

Il va de soi que l'on pourra utiliser des moyens différents pour le déplacement commandé du chalumeau à gaz 20. Il va de soi également que l'on pourra compléter l'installation en utilisant une pluralité de chalumeaux à gaz 20 disposés chacun devant une face du produit sidérurgique, de façon à permettre l'inspection simultanée de plusieurs faces et rives du produit sidérurgique.

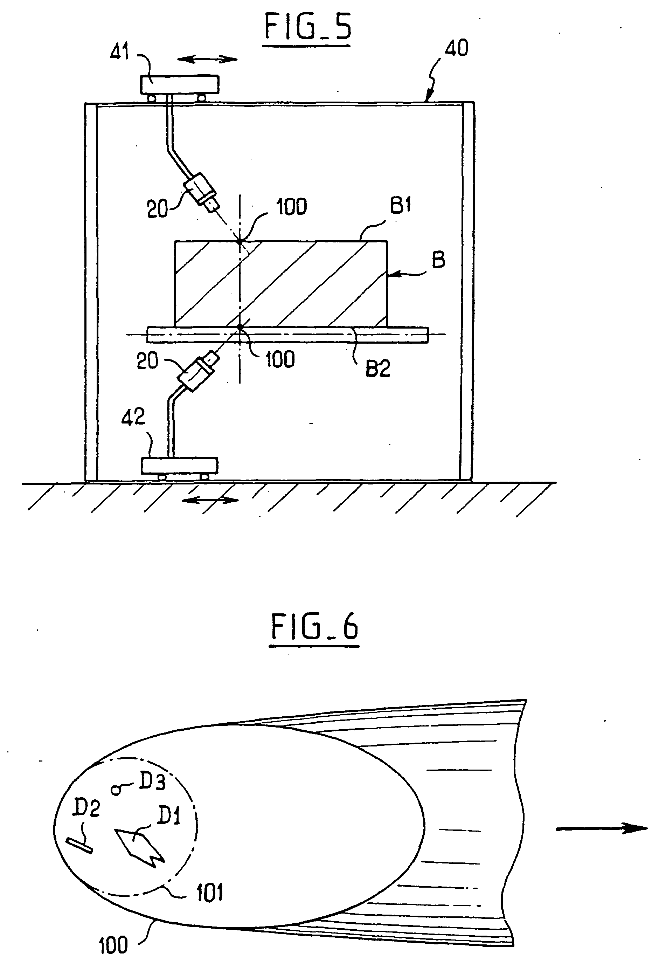

La figure 5 illustre ainsi un support différent du chalumeau à gaz 20, réalisé au moyen d'un portique 40 sur lequel roule un chariot 41. Un autre chalumeau à gaz 20 et monté sur un chariot 42 se déplaçant à l'aplomb du premier chalumeau, sous le produit sidérurgique B ici en défilement. Les zones d'impact 100 des deux chalumeaux à gaz 20 sur les faces opposées B1 et B2 du produit B restent sur une même verticale, grâce à un déplacement parfaitement synchrone des deux chariots 41,42.

Dans tous les cas, l'installation de sondage pourra être suivie d'une installation de décriquage manuelle ou automatique. Le décriquage automatique est évidemment très avantageux, car l'action de l'installation de décriquage peut être totalement pilotée en fonction du défaut précédemment détecté et reconnu par l'installaticn de sondage (variante non représentée).

On va maintenant décrire plus en détail le mode d'analyse et de reconnaissance des défauts que peuvent présenter les faces inspectées du produit sidérurgique en défilement.

La figure 6 permet de reconnaître la zone sensiblement elliptique du bain de sondage 100 sur la face inspectée du produit sidérurgique. Ce bain de sondage 100 est naturellement en déplacement continu dans une direction qui correspond sensiblement au grand axe de l'ellipse. Une zone partielle du bain de sondage 100, notée 101, correspond au champ de visualisation du dispositif d'observation visuelle intégré dans le chalumeau à gaz 20. Dans la pratique, ce champ de visualisation sera délimité par un cercle de 30 à 50 millimètres de diamètre environ. Ainsi que cela est aisé à comprendre, la partie d'extrémité du bain de sondage qui est dans le cercle correspond à la zone la plus profonde du bain.

Sur la figure 6, on a également représenté des défauts D₁, D₂, D₃ qui sont de géométries et d'importances très différentes. En l'espèce, le défaut D₁, relativement important, représente une macro-inclusion, tandis que le défaut D₂, étroit et allongé représente une crique, et le défaut D₃, sensiblement circulaire et de petit diamètre, représente une micro-inclusion. Ce sont précisément ces géométries différentes qui vont permettre d'identifier et de reconnaître les défauts visualisés par le dispositif d'observation.

On utilise à cet effet un dispositif d'analyse d'images et de reconnaissance automatique des défauts apparaissant dans le champ de vision 101 du dispositif d'observation visuelle 15,16.

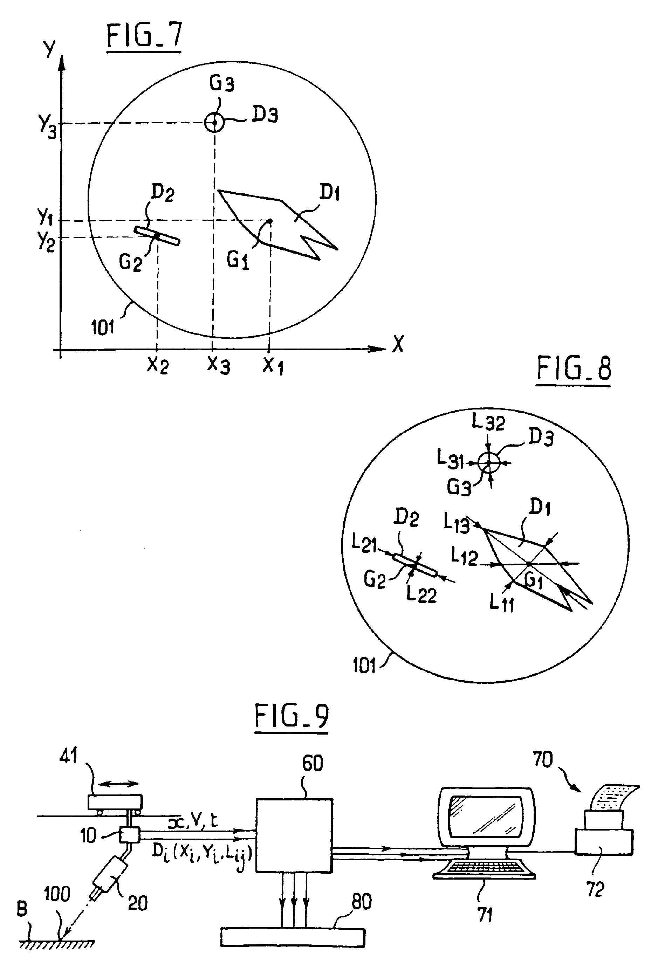

Si l'on se reporte aux figures 7 et 8, on retrouve les défauts D₁, D₂, D₃ précités dans la zone 101. On a noté G₁,G₂,G₃ le centre de gravité ou barycentre des trois zones de défaut D₁,D₂,D₃, et chaque point G₁,G₂,G₃ est repéré par ses coordonnées (X₁;Y₁), (X₂;Y2) et (X₃;Y₃).

Plus précisément, le dispositif d'analyse d'images et de reconnaissance de défauts comporte un moyen pour analyser les différences de nuance sur la surface inspectée afin de détecter la présence d'un défaut, un moyen pour analyser des paramètres dimensionnels du défaut localisé, et un moyen pour comparer ces paramètres à des paramètres pré-établis afin d'identifier le type de défaut dont il s'agit.

Pour l'analyse des différences de nuance sur la surface inspectée, on pourra choisir une nuance de couleur ou des niveaux de gris en utilisant alors respectivement un système Tri-CCD ou un système Mono-CCD. Le premier système est plus précis que le second, mais il est aussi plus onéreux.

Pour ce qui est des paramètres dimensionnels analysés, ces paramètres seront de préférence choisis dans le groupe comportant le profil périmétrique, la surface, la position du barycentre (ou centre de gravité), et la profondeur du défaut. On utilise alors des lignes de jauge qui représentent des mesures selon des axes prédéterminés. Ceci sera mieux compris en se référant à la figure 8 :
- pour le défaut D₁ qui est une macro-inclusion en forme de queue de comète, on distingue trois lignes de jauge L₁₁, L₁₂ et L₁₃. Ainsi que cela est aisé à comprendre, seule une dimension importante selon ces trois lignes de jauge peut correspondre à un défaut de ce type ;
- pour le défaut D₂, on utilise deux lignes de jauge L₂₁, L₂₂ qui correspondent à une grande différence selon deux directions perpendiculaires : une telle forme permet de reconnaître immédiatement un défaut du type crique ;
- pour le défaut D₃, deux lignes de jauge L₃₁, L₃₂ selon des axes sensiblement perpendiculaires permettent de détecter une faible distance selon ces deux lignes, et de reconnaître alors une micro inclusion.

Il va de soi que l'invention n'est pas limitée aux types de défauts précités, et que l'on pourra imaginer la caractérisation d'une multitude de défauts tels que soufflures ou autres, qui seront définis par des paramètres particuliers relatifs à leur géométrie, surface, et dimensions.

La figure 9 illustre l'installation de sondage en continu qui vient d'être décrite, associée à une unité de traitement et à un automate de coulée.

On distingue sur cette figure schématique un analyseur d'images 60 qui reçoit du support 10 du chalumeau les données x,V,t correspondant respectivement à l'abscisse (transversale) du chalumeau, à sa vitesse de déplacement et à l'instant considéré. L'analyseur d'images 60 reçoit également des données visuelles qui correspondent à chacun des défauts Dᵢ, c'est-à-dire les coordonnées Xᵢ,Yᵢ de leur barycentre, ainsi que les différentes dimensions selon les lignes de jauge Lᵢⱼ, et plus généralement toute autre information permettant d'améliorer la définition du défaut.

L'analyseur d'images 60 est associé à un système de reconnaissance, et il est relié à une unité de traitement 70 qui comprend un ordinateur 71 et une imprimante 72. La mémoire de l'ordinateur 71 permettra notamment de constituer une réserve de cartes d'identification des différents défauts à reconnaître que l'on a préalablement déterminés.

L'analyseur d'images 60 communique ici également avec l'automate de coulée 80 qui pilote la coulée continue. Le fait que le dispositif d'analyse d'images et de reconnaissance de défauts soit relié à l'automate de coulée 80 procure dans la pratique un avantage considérable, car cela permet une intervention rapide et directe sur les paramètres de coulée en fonction des défauts détectés et reconnus. Ainsi., il devient possible, et ce sans la moindre intervention humaine, d'envoyer un signal de commande à l'automate de coulée, afin de modifier certain des paramètres de la coulée continue pour éviter de générer des défauts qui viennent d'être détectés et reconnus. Ceci représente un progrès considérable par rapport aux analyses classiques faites a posteriori sur un produit froid.

Selon un mode d'éxécution particulier de l'invention, le chalumeau à gaz 20 équipé du dispositif d'observation visuelle peut être un chalumeau d'oxycoupage dont on réalise alors la régulation automatique. L'automatisation complète est obtenue par l'asservissement des paramètres de coupe (vitesse, pression, etc..) et aussi par l'observation de la saignée de coupe.

Selon une autre possibilité, le chalumeau à gaz 20 équipé du dispositif d'observation visuelle peut être un chalumeau de décriquage dont on réalise alors la régulation automatique en fonction du défaut détecté et reconnu.

L'invention n'est pas limitée au mode de réalisation qui vient d'être décrit, mais englobe au contraire toute variante reprenant, avec des moyens équivalents, les caractéristiques essentielles énoncées plus haut.

## Revendications

1. Procédé de sondage en continu de produits sidérurgiques venant de coulée comportant :
- la détection de défauts sur lesdits produits sidérurgiques par des moyens de détection de défauts ;
- le déplacement commandé des moyens de détection de défauts transversalement à une direction de défilement des produits sidérurgiques ;
**caractérisé en ce que** les moyens de détection de défauts comportent au moins un chalumeau à gaz agencé pour générer sur une face des produits sidérurgiques un bain de matière en fusion, ledit au moins un chalumeau comprenant un corps ayant un conduit central d'arrivée d'oxygène dans lequel est agencé un dispositif d'observation visuelle permettant l'observation directe d'une zone concernée par le bain de sondage en vue d'y détecter d'éventuels défauts, le dispositif d'observation visuelle étant associé à un dispositif d'analyse d'images de reconnaissance automatique des défauts apparaissant dans le champs de vision du dispositif d'observation visuelle.

2. Procédé selon la revendication 1, dans lequel le dispositif (60) d'analyse d'images et de reconnaissance des défauts comporte un moyen pour analyser des différences de nuances sur la surface inspectée afin de détecter la présence d'un défaut, un moyen pour analyser des paramètres dimensionnels du défaut localisé, et un moyen pour comparer ces paramètres à des paramètres préétablis afin d'identifier le type de défaut dont il s'agit.

3. Procédé selon la revendication 2, dans lequel les paramètres dimensionnels analysés sont choisis dans le groupe comportant le profil périmétrique, la surface, la position du barycentre et la profondeur du défaut.

4. Procédé selon l'une des revendications 1 à 3, comportant le décriquage des défauts détectés au moyen d'une installation de décriquage placée en aval des moyens de détection de défauts, cette installation étant pilotée, en fonction du défaut précédemment détecté et reconnu, en vue d'un décriquage automatique de la zone dudit défaut.

5. Procédé selon l'une des revendications 1 à 4, dans lequel ledit au moins un chalumeau à gaz est un chalumeau d'oxycoupage, dont on réalise alors la régulation automatique.

6. Procédé selon l'une des revendications 1 à 4, dans lequel ledit au moins un chalumeau à gaz (20) équipé du dispositif d'observation visuelle (15) est un chalumeau de décriquage, dont on réalise alors la régulation automatique.

7. Procédé selon l'une des revendications 1 à 6, dans lequel le dispositif d'observation visuelle (15) comporte une caméra (16) reliée à au moins une fibre optique (15) passant dans le corps du chalumeau (21, 22).

8. Procédé selon l'une des revendications 1 à 7, dans lequel le dispositif (60) d'analyse d'images et de reconnaissance des défauts est relié à une unité de traitement (70) comportant un ordinateur (71) et une imprimante (72).

9. Procédé selon l'une des revendications 1 à 8, dans lequel le dispositif (60) d'analyse d'images et de reconnaissance des défauts est relié à l'automate de coulée (20) pour permettre une intervention sur les paramètres de coulée en fonction de défauts détectés et reconnus.

10. Installation de sondage en continu de produits sidérurgiques venant de coulée, comportant :
- des moyens de détection de défauts sur lesdits produits sidérurgiques ;
- des moyens de déplacement commandés pour déplacer les moyens de détection de défauts transversalement à une direction de défilement des produits sidérurgiques;
**caractérisée en ce que** les moyens de détection de défauts comportent :
- au moins un chalumeau à gaz agencé pour générer sur une face des produits sidérurgiques un bain de matière en fusion, ledit au moins un chalumeau comprenant un corps (21,22) ayant un conduit central d'arrivée d'oxygène (23) dans lequel est agencé un dispositif d'observation visuelle (15) permettant l'observation directe d'une zone de ladite face concernée par le bain de sondage en vue d'y détecter d'éventuels défauts ; et
- un dispositif (60) d'analyse d'images et de reconnaissance automatique des défauts apparaissant dans le champ de vision du dispositif d'observation visuelle (15), le dispositif (60) d'analyse d'images et de reconnaissance des défauts comportant un moyen pour analyser des différences de nuances sur la surface inspectée afin de détecter la présence d'un défaut, un moyen pour analyser des paramètres dimensionnels du défaut localisé, et un moyen pour comparer ces paramètres à des paramètres préétablis afin d'identifier le type de défaut dont il s'agit.

## Claims

1. A method of continuously monitoring iron and steel castings, the method comprising the step of :
- detecting defects on said castings by using defect detection means ;
- controlling the movement of the defect detection means transversely to a travel direction of said castings;
the method being **characterized in that** the defect detection means include at least one gas blowtorch arranged to generate a bath of molten material on one face of the castings, said at least one blowtorch comprising a body having a central oxygen feed duct having a visual observation system arranged therein enabling a zone concerned by the monitor bath to be observed directly in order to detect possible defects therein, said visual observation system being associated to an apparatus for analyzing images and automatically recognizing any defects that appear in the field of view of the visual observation system.

2. A method according to claim 1, wherein the apparatus (60) for analyzing images and for recognizing defects comprises means for analyzing differences of shade over the inspected area so as to detect the presence of a defect, means for analyzing dimensional parameters of a located defect, and means for comparing said parameters with preestablished parameters in order to identify the type of defect in question.

3. A method according to claim 2, wherein the dimensional parameters analyzed are selected from the group comprising: perimeter profile; area; position of barycenter; and depth of defect.

4. A method according to any one of claims 1 to 3, comprising the deseaming of the detected defects by means of a deseaming installation placed downwards of the defect detection means, said installation being controlled as a function of any defect previously detected and recognized for the purpose of automatically deseaming the zone containing said defect.

5. A method according to any one of claims 1 to 4, wherein said at least one gas torch is an oxygen cutting torch, which torch is regulated automatically.

6. A method according to any one of claims 1 to 4, wherein said at least one gas torch (20) fitted with the visual observation system (15) is a deseaming torch, which is regulated automatically.

7. A method according to any one of claims 1 to 6, wherein the visual observation system (15) comprises a camera (16) connected to at least one optical fiber (15) passing through the body of the torch (21, 22).

8. A method according to any one of claims 1 to 7, wherein the apparatus (60) for analyzing images and recognizing defects is connected to a processor unit (70) comprising a computer (71) and a printer (72).

9. A method according to any one of claims 1 to 8, wherein the apparatus (60) for analyzing images and recognizing defects is connected to the casting controller (20) to enable action to be taken on casting parameters as a function of any defects that are detected and recognized.

10. An installation for continuously monitoring iron and steel castings, the installation comprising :
- defect detection means for detecting defects on said castings;
- controlled moving means for moving the defect detection means transversely to a travel direction of said castings;
the installation being **characterized in that** the defect detection means include :
- at least one gas blowtorch arranged to generate a bath of molten material on one face of the castings, said at least one blowtorch comprising a body (21, 22) having a central oxygen feed duct (23) having a visual observation system (15) arranged therein enabling a zone concerned by the monitor bath to be observed directly in order to detect possible defects therein ; and
- an apparatus (60) for analyzing images and automatically recognizing any defects that appear in the field of view of the visual observation system (15), said apparatus (60) for analyzing images and for recognizing defects comprising means for analyzing differences of shade over the inspected area so as to detect the presence of a defect, means for analyzing dimensional parameters of a located defect, and means for comparing said parameters with preestablished parameters in order to identify the type of defect in question.

## Patentansprüche

1. Verfahren zum kontinuierlichen Überwachen von gegossenen Eisenhüttenprodukten, umfassend:
- das Erfassen von Fehlern an den Eisenhüttenprodukten durch Fehlererfassungsmittel,
- das gesteuerte Verschieben der Fehlererfassungsmittel quer zu einer Laufrichtung der Eisenhüttenprodukte,
**dadurch gekennzeichnet, dass** die Fehlererfassungsmittel mindestens einen Gasbrenner umfassen, der so angeordnet ist, dass er auf einer Fläche der Eisenhüttenprodukte ein Schmelzbad erzeugt, wobei der mindestens eine Gasbrenner ein Gehäuse umfasst, das einen zentralen Sauerstoffzuführkanal hat, in dem eine Vorrichtung zur visuellen Beobachtung angeordnet ist, die die direkte Beobachtung eines von dem Prüfbad betroffenen Bereiches ermöglicht, um dort mögliche Fehler zu erfassen, wobei die Vorrichtung zur visuellen Beobachtung mit einer Bildanalysevorrichtung zur automatischen Erkennung von Fehlern verbunden ist, die in dem Sichtfeld der Vorrichtung zur visuellen Beobachtung erscheinen.

2. Verfahren nach Anspruch 1, bei dem die Bildanalyse- und Fehlererkennungsvorrichtung (60) Mittel zum Analysieren von Nuancenunterschieden auf der untersuchten Oberfläche umfasst, um das Vorhandensein eines Fehlers zu erfassen, Mittel zum Analysieren der Dimensionsparameter des lokalisierten Fehlers sowie Mittel zum Vergleichen dieser Parameter mit vorgegebenen Parametern, um die Art von Fehler, um die es sich handelt, zu identifizieren.

3. Verfahren nach Anspruch 2, bei dem die analysierten Dimensionsparameter aus der Gruppe ausgewählt werden, die das Umfangsprofil, die Oberfläche, die Position des Baryzentrums und die Tiefe des Fehlers umfasst.

4. Verfahren nach einem der Ansprüche 1 bis 3, umfassend das Brennflämmen der erfassten Fehler mittels einer Brennflämmvorrichtung, die stromabwärts der Fehlererfassungsmittel angeordnet ist, wobei diese Vorrichtung in Abhängigkeit von dem zuvor erfassten und erkannten Fehler im Hinblick auf ein automatisches Brennflämmen des Bereichs des Fehlers gesteuert wird.

5. Verfahren nach einem der Ansprüche 1 bis 4, bei dem der mindestens eine Gasbrenner ein Schneidbrenner ist, der dann automatisch geregelt wird.

6. Verfahren nach einem der Ansprüche 1 bis 4, bei dem der mindestens eine Gasbrenner (20), der mit der Vorrichtung (15) zur visuellen Beobachtung ausgerüstet ist, ein Flämmschneidbrenner ist, der dann automatisch geregelt wird.

7. Verfahren nach einem der Ansprüche 1 bis 6, bei dem die Vorrichtung (15) zur visuellen Beobachtung eine Kamera (16) umfasst, die mit mindestens einer optischen Faser (15) verbunden ist, die in,das Gehäuse des Brenners (21, 22) geht.

8. Verfahren nach einem der Ansprüche 1 bis 7, bei dem die Bildanalyse- und Fehlererkennungsvorrichtung (60) mit einer Verarbeitungseinheit (70) verbunden ist, die einen Rechner (71) und einen Drucker (72) umfasst.

9. Verfahren nach einem der Ansprüche 1 bis 8, bei dem die Bildanalyse- und Fehlererkennungsvorrichtung (60) mit einer Gießmaschine (20) verbunden ist, um ein Eingreifen auf die Gießparameter in Abhängigkeit von den erfassten und erkannten Fehlern zu ermöglichen.

10. Prüfanlage zum kontinuierlichen Überwachen von gegossenen Eisenhüttenprodukten, umfassend:
- Mittel zum Erfassen von Fehlern an den genannten Eisenhüttenprodukten,
- Mittel zum gesteuerten Verschieben, um die Fehlererfassungsmittel quer zu einer Laufrichtung der Eisenhüttenprodukte zu verschieben,
**dadurch gekennzeichnet, dass** die Fehlererfassungsmittel umfassen:
- mindestens einen Gasbrenner, der so angeordnet ist, dass er auf einer Fläche der Eisenhüttenprodukte ein Schmelzbad erzeugt, wobei der mindestens eine Gasbrenner ein Gehäuse (21, 22) umfasst, das einen zentralen Sauerstoffzuführkanal (23) hat, in dem eine Vorrichtung (15) zur visuellen Beobachtung angeordnet ist, die die direkte Beobachtung eines Bereichs der von dem Prüfbad betroffenen Fläche ermöglicht, um dort mögliche Fehler zu erfassen, und
eine Vorrichtung (60) zur Bildanalyse und zur automatischen Erkennung von Fehlern, die in dem Sichtfeld der Vorrichtung (15) zur visuellen Beobachtung erscheinen, wobei die Bildanalyse- und Fehlererkennungsvorrichtung (60) Mittel zum Analysieren von Nuancenunterschieden auf der untersuchten Oberfläche umfasst, um das Vorhandensein eines Fehlers zu erfassen, Mittel zum Analysieren der Dimensionsparameter des lokalisierten Fehlers sowie Mittel zum Vergleichen dieser Parameter mit vorgegebenen Parametern, um die Art von Fehler, um die es sich handelt, zu identifizieren.
